Europäisches Patentamt

(19) European Patent Office

Office européen des brevets

(11) Publication number: **0 356 001**
**A2**

## (12) EUROPEAN PATENT APPLICATION

(21) Application number: **89307416.1**

(22) Date of filing: **20.07.89**

(51) Int. Cl.⁴ **E21B 37/06 , C10L 1/12**

(30) Priority: **22.07.88 US 222801**

(43) Date of publication of application:
**28.02.90 Bulletin 90/09**

(84) Designated Contracting States:
**AT BE CH DE ES FR GB GR IT LI LU NL SE**

(71) Applicant: **UNION OIL COMPANY OF
CALIFORNIA
1201 West 5th Street
Los Angeles California 90017(US)**

(72) Inventor: **Kissel, Charles L.
2856 West Skywood Circle
Anaheim, California 92804(US)**
Inventor: **Pilling, Richard L.
1608 Skyline Drive
Fullerton, California 92631(US)**

(74) Representative: **Jack, Bruce James et al
FORRESTER & BOEHMERT
Widenmayerstrasse 4/I
D-8000 Munchen 22(DE)**

(54) Dissolution of paraffinic/bituminous deposits and pour point reduction.

(57) Methods are provided for facilitating the production of petroleum containing waxes and/or bitumens from oil wells by introducing into the petroleum in the well one or more thiocarbonate compounds in amounts sufficient to increase the solubility of wax and/or bitumens in the petroleum and/or dissolve waxy and/or bituminous deposits within the well. These methods are also useful for increasing the solubility of waxes and bitumens in petroleum and other partially or completely refined hydrocarbon fractions and for preventing the formation of or promoting the dissolution of deposits in processing, transport and storage facilities. Compositions useful in such methods are also provided.

EP 0 356 001 A2

## Dissolution of paraffinic/bituminous deposits and pour point reduction

The invention relates to the field of petroleum production and to the treatment of petroleum and hydrocarbon fractions to reduce melting point and/or pour point and to enhance the solubility of waxes and bitumens in such materials.

High molecular waxy and bituminous compounds contained in many petroleum sources can complicate the production of petroleum from wells in several respects. As the petroleum approaches the surface, its temperature is generally reduced, often by an amount sufficient to cause the formation of wax and/or bitumen deposits on production tubing and/or in aboveground pipes and storage facilities. Waxy paraffin and bitumen deposits can also form on the well bore surface in the vicinity of the producing zone, and such deposits can significantly reduce the efficacy of and otherwise complicate attempts to acidize the formation. All paraffinic hydrocarbons, including waxes, are inert to the acids typically used to acidize oil-bearing formations, such as hydrochloric acid. Thus, a layer of wax deposited on the surface of the oil-bearing zone will effectively shield the zone from acid treatment, preventing removal of inorganic materials by the acid, regardless of contact time. In contrast to the inertness of paraffin waxes, asphaltic oils, which contain bitumens, rapidly and irreversibly react with strong acids to produce heavy sludge which is most often insoluble even in the best solvents available. Thus, acid treatment of a well producing such oils or containing bituminous deposits will result in severe permeability loss which can require refracturing or even recompletion of the well.

Even if waxy or bituminous deposits do not form within the well or aboveground equipment, the pour point of such crude oils increases significantly as the freezing point is approached, substantially increasing viscosity and thereby reducing production rate and/or increasing energy demands to facilitate production and transport.

It is known, as disclosed in U.S. Patent 2,358,665, that concentrated carbon disulfide dissolves both paraffin waxes and bitumens in lower molecular weight hydrocarbons characteristic of petroleum oils, and the addition of carbon disulfide to petroleum wells to dissolve waxes and bitumens was practiced until the 1960s. However, the use of carbon disulfide was discontinued due to the hazards associated with its use, including its extreme volatility, flammability and toxicity. A much safer alternative, still practiced today, involves the use of ethylene-vinylacetate copolymers with long chain alpha-olefin alcohols which are added to petroleums in amounts sufficient to inhibit crystallization of waxes and bitumens. However, treatment with such polymers requires the use of heavy aromatic solvents which pose significant environmental problems, and the polymers and solvents are quite expensive in the volumes that must be employed. Such polymer treatments also must be employed under heated conditions in order to be efficient, requiring specialized equipment and additional energy input. In addition, the ethylene-vinylacetate copolymers are becoming increasingly expensive, due to their scarcity and a reduction in the number of manufacturers supplying suitable materials.

Accordingly, a significant need exists for a relatively inexpensive, safe yet effective method for preventing the formation of and/or removing waxy and/or bituminous deposits in petroleum wells and for reducing the pour point and melting point of petroleum containing wax or bitumen.

## SUMMARY OF THE INVENTION

The invention involves methods and compositions for removing and/or preventing the deposition of waxy and/or bituminous deposits in petroleum-producing wells by introducing into the petroleum within the well a thio-carbonate compound selected from ammonium and alkali and alkaline earth metal tri- and tetrathiocarbonates and combinations thereof. The thiocarbonate may be added to the petroleum in any form and/or may be added in combination with water and/or an acid to reduce the pH of the aqueous phase and accelerate decomposition of the thiocarbonate to form carbon disulfide. These methods are also useful for reducing the pour point and melting point of hydrocarbons other than crude petroleum containing waxes and/or bitumens and for facilitating the removal of wax and/or bituminous deposits from hydrocarbon-bearing formations in the vicinity of a well bore to improve permeability and/or facilitate acidizing. The invention also provides compositions, useful in these methods, which involve petroleum or other hydrocarbons containing waxes and/or bitumens and one or more of the described thiocarbonate compounds and, optionally, water and/or added acid.

## DETAILED DESCRIPTION OF THE INVENTION

Hydrocarbons which can be advantageously treated by the methods of this invention to dissolve and/or prevent deposit formation or reduce melting point and/or pour point include crude petroleum and partially and completely refined hydrocarbons containing waxy paraffins and/or bitumens. Typically, the hydrocarbons, including crude petroleum, contain at least about 5, generally at least about 10 and often at least about 15 weight percent combined wax and bitumen. These methods are particularly advantageous when employed with hydrocarbons containing at least about 5 percent and generally at least about 10 weight percent waxy paraffins.

As used herein, waxes are predominantly straight or slightly branched chain paraffinic hydrocarbons containing at least about 16 carbon atoms per molecule, typically about 16 to about 70 carbon atoms per molecule. Bitumens are not as clearly defined as are paraffin waxes and include three sub-classes -- asphaltenes, maltenes and resins, which are generally classified on the basis of procedures involved in their separation and isolation -- and the composition of bitumens can vary significantly from one crude petroleum source to another, including hydrocarbons derived from such sources. Asphaltenes are typically of higher molecular weight than maltenes and resins, are soluble in carbon bisulfide and insoluble in paraffin naphthas (ASTMD-8-1963), and comprise condensed ring polynuclear aromatic groupings interconnected with aliphatic linkages. Asphaltenes can contain nitrogen, oxygen and sulfur atoms, in addition to carbon and hydrogen, as well as complexed metals, such as nickel, vanadium and iron. Maltenes and resins share the same building blocks as asphaltenes but are of lower molecular weight and have a higher proportion of paraffinic side chains to condensed ring aromatics. While asphaltenes, per se, are generally insoluble in crude petroleum, they associate with maltenes and resins which form a transition layer between the asphaltenic core of a micelle and the remainder of the crude whereby the "peptizing" layers of maltenes and resins surrounding the asphaltenic core produce a colloidal particle or micelle which remains dispersed in the hydrocarbon phase.

A variety of problems can result from the presence of paraffin waxes and/or bitumens (asphaltenes) and particularly from the presence of both waxes and bitumens in whole crudes for refined hydrocarbons streams. All of the wax in a waxy crude will be in true solution at sufficiently high temperatures. As the temperature of the crude is reduced, at some point the solubility limit of the highest melting point, highest molecular weight wax component will be exceeded. That material will commence to form crystals, and the crystallization process will continue as the temperature of the system is lowered until all wax has come out of solution. The temperature at which the first crystals form is called the Cloud Point of the oil. Above its cloud point, a crude cannot experience wax problems of any sort. The probability of developing wax deposits, wax-protected emulsions, wax-coated solids, waxy tank bottoms, or congealed pipelines increases as the temperature of the crude drops further below the cloud point.

The pour point of an oil is commonly defined in ASTM D97 test procedure as the temperature at which the oil just ceases to move or flow in a 30 - 33.5 mm. ID tube when the tube is rotated from vertical to horizontal and held in that position for five seconds. During the test the oil is cooled at a prescribed rate from an initial temperature above its cloud point. The pour point reflects the ability of the wax in the crude to develop a crystalline network of sufficient strength to entrain and immobilize the oil phase. Several observations can be made as a direct result of this conclusion. For instance, asphaltenes, even in small concentrations, have a strong effect on the nature of the crystals of wax grown in their presence. If the temperature of a crude containing wax crystals is raised just to the cloud point and held at that point, the asphaltenes apparently act as nucleation sites for recrystallization when the mixture is cooled. On the other hand, if the crude is heated well above the cloud point and then cooled rapidly, nucleation appears to take place independently of the asphaltenes. Furthermore, the asphaltenes now act as crystal modifiers, giving shorter, less cohesive crystals. The measured pour point of the crude strongly reflects these two heating and cooling techniques. The first, where the cloud point is not exceeded and cooling is slow, gives the highest pour point that can be observed for the crude. The second, with rapid cooling from a higher temperature, gives a pour point much lower, and is not a useful measure of the potential wax problems in the system.

When a waxy crude is allowed to cool undisturbed, a gel structure will develop at some temperature and become progressively stronger with time and at such lower temperatures. The yield strength of the crude under these conditions is of great importance to operators of pipelines located in inaccessible places, such as the bottom of the North Sea. Should some accident force a prolonged shutdown of the line, its contents would approach ambient temperature. The amount of pressure needed to restart flow is limited by the pump design and the burst pressure on the line. The operator must treat the oil to ensure that the yield strength after the longest expected shutdown time does not exceed the maximum start-up pressure allowed.

Asphaltenes, per se, are insoluble in the crude; yet they move within the formation, into the well bore, and eventually to the refinery due to the presence of maltenes and resins which form a peptizing layer around the asphaltenes. This layer makes a smooth transition between the polar, low hydrogen/carbon ratio core and the nonpolar, high hydrogen/carbon ratio bulk oil.

The quantity of peptizing maltenes and resins relative to the quantity of asphaltenes is different from oil to oil. Where there is just enough to accomplish the stabilization of the colloidal system, it is very easy to precipitate asphaltenes. This can occur even when the total asphaltene content is low. Conversely, a very high asphaltene content oil can still show great stability against precipitation if there is a generous excess of peptizing material present. One empirical test for asphaltene stability is the Oliensis Spot Test. A weighed amount of the crude oil is titrated with small increments of a solvent which takes the peptizing maltenes and resins into true solution and leaves the asphaltenes to precipitate as an insoluble solid. The larger the amount of solvent the oil will tolerate before an asphaltene precipitate is detected, the more stable the colloidal system is taken to be. The titrating solvent most often used is hexadecane, $C_{16}H_{34}$. Asphaltene precipitate is detected by removing one drop of the test solution after each addition of hexadecane and placing it on a filter paper. The filter paper is placed in a 100° C. oven for 10 minutes. If the drop contains no solids, it will spread uniformly into a brown circle. If an asphaltene precipitate has formed, the solid particles will not move beyond the initial boundary of the drop and will show up as a faint, darker circle near the center of the larger oil-wet circle.

Asphaltic oils which are close to precipitating asphaltenes must be treated with care. High shear flow, as through a choke or past a defective pump valve, gas break out in the tubing, or loss of light ends in a heater-treater, may be sufficient to precipitate asphaltenes. If emulsified water is present, the materials so liberated may migrate to the water droplet-oil interface and make the emulsion much more difficult to treat.

Additional problems can result when solvent-washing a well which produces asphaltic oil, regardless of the stability of the oil. Typically, high aromatic content solvents must be employed, since a non-aromatic solvent will have the same effect on the oil in the well as hexadecane has in the Oliensis Spot Test described above. The peptizing maltenes and resins will be further solvated, and the asphaltenes will precipitate. If this takes place in the formation, gravel pack or aboveground equipment, oil permeability is greatly reduced and may never be completely recovered and/or other process equipment may be impaired or plugged.

All of the above-described problems associated with the wax and bitumen content of petroleum and other hydrocarbon streams can be mitigated or eliminated by incorporating in the hydrocarbon a thiocarbonate compound in accordance with this invention. The useful thiocarbonates include, without limitation, salts of trithiocarbonic acid and tetrathiocarbonic acid, compositions having empirical formulae intermediate to these acid salts (such as $MCS_{3.7}$, wherein M is a divalent metal ion), and compositions containing substances in addition to thiocarbonates, such as a stabilized ammonium tetrathiocarbonate which contains ammonium sulfide, i.e., $(NH_4)_2CS_4 \cdot (NH_4)_2S$. These compositions are generally water soluble and can be prepared, stored, and used in aqueous solutions. The solutions are stable during prolonged periods of storage in a closed container, exhibit low vapor pressure, and are not flammable.

Ammonium thiocarbonates can be prepared by the procedures described in United States Patent 4,476,113, the disclosure of which is incorporated herein by reference in its entirety. Briefly, they can be prepared by mixing ammonia, hydrogen sulfide, carbon disulfide, water, and, optionally, sulfur in the proper proportions, and under conditions which facilitate removal of the heat generated during the reaction. Most of this heat results from the mixing of ammonia and hydrogen sulfide, and from the addition of carbon disulfide to the other components. No particular order of component addition is required, except that ammonia must either be present prior to hydrogen sulfide addition or must be added concurrently with the hydrogen sulfide. In a typical batch preparation, the required amount of water will be introduced into a container (which has cooling coils or other heat exchanging means), followed by the sequential additions of gaseous or liquid ammonia and hydrogen sulfide, sulfur (if required), and carbon disulfide.

Many variations in the foregoing preparation are possible. For example, ammonia can be added as an aqueous ammonia solution, to satisfy all, or some part, of the ammonia requirement, reducing the amount of cooling needed. A further reduction in cooling can be obtained by using an ammonium sulfide solution or solid to provide any desired amount of the ammonia and hydrogen sulfide requirement. Sulfur, if required, can be added as the element or as a solution in carbon disulfide. A portion of the ammonia and hydrogen sulfide can be replaced with a soluble sulfide material such as alkali metal sulfide, alkaline earth metal sulfide, or any mixture thereof. The maximum replaced portion will usually be equivalent in sulfide content to that amount of hydrogen sulfide which would exceed the carbon disulfide molarity in a particular composition. A typical continuous-flow production of the composition involves dissolving molten sulfur in carbon disulfide using a mixing vessel which can be cooled, for example, by external recycle through a heat exchanger, followed by combining the sulfur solution with water, liquid ammonia and liquid hydrogen sulfide in a cooled reactor.

The reactor in either a batch or continuous process should be maintained at a somewhat elevated temperature, e.g., about 25° C. to about 70° C., to promote the rapid formation of a clear solution. Stirring or other mixing of the reactor contents also is useful in this regard. A holding time of about one hour is normally sufficient for obtaining the desired product solution.

The thiocarbonate solutions obtained by the above procedures comprise aqueous solutions of up to about fifty percent by weight solute, in which solute the molarity of hydrogen sulfide can be greater than the molarity of carbon disulfide, and is preferably about one-half the molarity of ammonia, and in which sulfur can also be present. Were it not for the preferred requirement that the hydrogen sulfide molarity exceeds that of the carbon disulfide, the range of solute compositions could include the stoichiometric equivalents of ammonium trithiocarbonate and ammonium tetrathiocarbonate. This requirement, in fact, is an important factor in obtaining the enhanced stability preferred in the compositions of this invention. The solubility limit of the ammonium thiocarbonate compositions is approximately 50 to 55 percent by weight solute, showing some variability which is dependent upon relative amounts of the various components present. Release of carbon disulfide is rapidly accelerated upon acidification or dilution with water. The ammonium thiocarbonate compositions are stabilized by excess sulfur against significant increases in vapor pressure, and against significant solid or immiscible liquid phase formation, during reasonable storage periods, and they also retain acceptable chemical stability during such periods.

Alkali and alkaline earth metal (i.e., magnesium, calcium, strontium, and barium) thiocarbonates are somewhat more stable against loss of carbon disulfide than is ammonium thiocarbonate. Alkali and alkaline earth metal thiocarbonates can be prepared by reacting the corresponding metal sulfides, either alone or mixed with elemental sulfur (when tetrathiocarbonate is to be prepared), with carbon disulfide, preferably in aqueous media, to directly form aqueous solutions. In the alternative, the metal sulfides can be generated in situ, by reaction of hydrogen sulfide with an aqueous solution or dispersion of alkali or alkaline earth metal salts, oxides, hydroxides, and the like.

The preparation is conveniently carried out at temperatures about 15° C. to, about 35° C., but may be conducted between about 0° C. and the boiling point of carbon disulfide, preferably under an inert or reducing gas atmosphere, to avoid oxidation of sulfur compounds to sulfur oxide moieties such as thiosulfates. Reactants are preferably provided in approximately stoichiometric amounts: one mole of metal sulfide per mole of carbon disulfide, to form the metal trithiocarbonate, and one additional mole of elemental sulfur added to form the tetrathiocarbonate. The reaction products have the empirical formula $M_nCS_x$ wherein n is 1 when M is an alkaline earth metal, n is 2 when M is alkali metal, and x is 3, 4 or values between 3 and 4.

The solubility limit for alkali and alkaline earth metal trithiocarbonates in water is approximately 55 percent by weight; the limit for corresponding tetrathiocarbonates is about 45 percent by weight. The solutions can be diluted with water to concentrations less than about 33 percent by weight, to avoid precipitation at low temperatures when desired.

The solid salts may be recovered as precipitates from non-aqueous media in which the reactants are combined as described for aqueous systems (under an inert or reducing atmosphere) if it is desirable to obtain the solid metal thiocarbonate. However, the aqueous solutions are substantially stable, and there is usually no necessity to recover the salt as a substantially anhydrous solid. Moreover, it is generally easier to handle the liquid solution than the solid alkali or alkaline earth metal thiocarbonate. While the above-described alkaline earth metal thiocarbonates may be used in any form (e.g., as a powder admixed with inert solids, as solution or dispersion in an organic solvent, etc.), it is presently preferred to use the aqueous solutions directly. Preferably, a strong base, e.g., an alkali metal hydroxide such as sodium hydroxide, is added to the aqueous thiocarbonate solution to increase the stability thereof during manufacture and storage.

One or more of the above-described thiocarbonates can be introduced directly into the wax/bitumen-containing petroleum (or other hydrocarbon fraction) as a solid or solution to reduce melting point and/or pour point, prevent deposit formation and/or remove deposits already existing in a well or aboveground equipment. If the hydrocarbon into which the thiocarbonate is introduced does not contain, or is not admixed with water, the thiocarbonate is preferably added as an aqueous solution to facilitate intermixing and distribution of thiocarbonate decomposition products throughout the hydrocarbon phase. The thiocarbonate or solution thereof can be introduced into a shut-in or producing well or into above-ground equipment by any one of several known methods for introducing materials into oil wells and hydrocarbon transport and processing equipment. For instance, a solution of one or more thiocarbonates can be introduced into the producing zone of an oil well through a "spaghetti" line passing down the well in the annular volume outside the production tubing and within the well bore.

Without intending to be constrained to any particular theory or mechanism of operation, it is presently believed that the described thiocarbonates prevent deposit formation, remove existing deposits, and reduce melting point and pour point by decomposing to release carbon disulfide which is assimilated by the hydrocarbon phase. Thus, it is preferable to assure that a significant proportion of the thiocarbonate has dissociated to release carbon disulfide rapidly enough to prevent deposit formation, remove existing deposits or reduce melting point and pour point in the zone effected. For instance, if it is desirable to remove deposits in production tubing of a petroleum well or prevent deposit formation in the tubing, it is preferable that the thiocarbonate be substantially decomposed by the time it is admixed with the oil entering the production tubing at the lower extremity thereof. Thiocarbonate dissociation rate can be accelerated by reducing the pH of an aqueous solution thereof. Thus, the pH of an aqueous thiocarbonate solution in contact with a hydrocarbon phase to be treated will be about 9 or less, typically about 8 or less, preferably about 7 or less and, when rapid dissociation is desired, about 6 or less and, most preferably, 4 or less. The pH of the aqueous solution can be reduced by addition of any suitable organic or inorganic acid or low-pH buffer. Typically, the pH of the solution is adjusted, and added acid or buffer introduced if necessary, to assure decomposition of at least about 50 percent of the thiocarbonate within about 1 hour or less, usually within about 30 minutes or less and, when rapid dissociation is required, within about 15 minutes or less. For instance, an aqueous solution containing 0.04 weight percent sodium tetrathiocarbonate has a half-life of 19 minutes at pH 9, and that half-life can be reduced to less than 1 minute by adding sufficient acid to reduce solution pH to 6. Here, solution half-life is defined as that period of time required to effect the dissociation of one-half the total quantity of thiocarbonate to carbon disulfide and other decomposition products. About 9 to 10 half-lifes are generally required for essentially complete dissociation of the thiocarbonate. Illustrative acids include hydrochloric, sulfuric, phosphoric, acetic, propionic, and other organic and inorganic acids.

The optimum pH required to obtain the desired degree of thiocarbonate dissociation within the required time in any particular situation can be readily determined by admixing the thiocarbonate and hydrocarbon phase under conditions existing in the zone to be treated, e.g., at the existing temperature and pressure, and periodically sampling the hydrocarbon phase and analyzing for carbon disulfide. Alternatively, the aqueous phase can be periodically sampled, when an aqueous solution is employed, and analyzed for residual thiocarbonate to determine the rate of decomposition. Decomposition rate can be further accelerated by reducing the pH, or decreased by increasing pH. Total carbon disulfide concentration in the hydrocarbon phase can be increased by increasing the rate of thiocarbonate decomposition and/or the total amount of thiocarbonate admixed with the hydrocarbon.

Significant, detectable levels of improvement in melting point, pour point and wax and bitumen solubility can be achieved at very low thiocarbonate (equivalent carbon disulfide) concentrations. However, total thiocarbonate concentration based on the weight of hydrocarbon phase will usually be at least about 50 ppm., typically at least about 100 ppm., and in more severe cases at least about 400 ppm. or even greater than 800 ppm. equivalent carbon disulfide. Most applications involve thiocarbonate concentrations corresponding to 50 to about 5000 ppm. equivalent carbon disulfide based on hydrocarbon, although the majority of applications will require maximum thiocarbonate concentrations corresponding to equivalent carbon disulfide concentrations of less than about 4000 ppm. (All ppm. values herein are by weight.)

The thiocarbonate can be introduced into the hydrocarbon phase and allowed to stand in a closed system in order to remove existing deposits, or it can be continuously or intermittently injected into flowing hydrocarbon streams to remove and/or prevent the occurrence of deposits or to reduce melting point and/or pour point. For instance, an aqueous solution of one or more of the above-described thiocarbonates can be introduced into the production tubing of a petroleum well or into a hydrocarbon pipeline continuously for a period sufficient to fill that portion of the production tubing, pipeline, etc. with hydrocarbon containing the thiocarbonate and/or decomposition products, and then flow can be stopped by shutting in the well or blocking the pipeline, and the resulting mixture allowed to stand for a period sufficient to dissolve existing deposits. Effectiveness of deposit dissolution depends on total carbon disulfide concentration, contact time, temperature and solvency of the liquid hydrocarbon phase for the existing deposit. The severity of treatment required, i.e., carbon disulfide concentration, contact time, temperature, etc., can be determined by sampling the deposit and exposing it to a hydrocarbon phase containing a corresponding amount of carbon disulfide under various conditions of temperature and contact time to define the conditions required to effect the desired degree of deposit removal. In the alternative, the effectiveness of deposit removal can be determined after treatment under operating conditions, and the treatment can be repeated several times to effect the desired degree of improvement. Typically, contact times will be at least about 5 minutes, and generally at least about 30 minutes. Continuous introduction of minor thiocarbonate concentrations can be employed to significantly improve the solvency of the hydrocarbon stream for existing deposits, to prevent formation of additional deposits, and to reduce the melting point and pour point of the hydrocarbon stream.

These methods can also be employed to remove wax and bitumen deposits from hydrocarbon-bearing formations in the vicinity of the well bore. For instance, the thiocarbonate can be introduced into the hydrocarbon stream as described above and the well can be pressured to a point above formation pressure to force the resulting hydrocarbon phase containing dissociated carbon disulfide into the reservoir to facilitate the dissolution of waxy and/or bituminous deposits in the area contacted by the carbon disulfide-containing hydrocarbon phase. This procedure is particularly effective for removing waxy and/or bituminous deposits from the immediate vicinity of the well bore prior to acidizing to enhance the effectiveness of acid treatment and prevent the formation of permeability-blocking deposits from the interaction of acid and bitumen. The well can remain pressured for from 30 minutes to several days, the longer contact periods being preferred to enhance the degree of deposit removal from the producing formation.

The invention is further described by the following examples which are illustrative of specific modes of practicing the invention and are not intended as limiting the scope of the invention as defined by the appended claims.

Example 1

Twenty-five grams of a 40 percent water cut as-produced crude oil having an API gravity of 27 degrees and containing 19.4 weight percent asphaltenes and 7.6 weight percent wax were introduced into each of eight vials. Varying proportions (shown in the following table) of a thiocarbonate solution prepared by dissolving one gram potassium trithiocarbonate ($K_2CS_3$) in one ml. deionized water and one ml. standard pH 3 phthalate buffer, were then added to each of the vials. The vials were then closed, shaken to assure thorough mixing, and held for 30 minutes. The vials were then sampled, and the pour point of each sample was determined by ASTM D97. The results are reported in the following table.

| Pour Point Reduction | | | |
|---|---|---|---|
| $K_2CS_3$ Soln., Milligrams | Equivalent $CS_2$, mg. | Equivalent $CS_2$, ppm. | Pour Point, °C. |
| 200 | 36 | 252 | 19 |
| 300 | 54 | 378 | 18 |
| 500 | 90 | 629 | 17 |
| 800 | 145 | 1014 | 16 |
| 1100 | 199 | 1392 | 15 |
| 1500 | 271 | 1895 | 13 |
| 2100 | 380 | 2657 | 11 |
| 2500 | 452 | 3161 | 8 |
| [a] Based on dry crude. | | | |

The aforegoing results illustrate that thiocarbonates can be safely employed to readily reduce the pour point (and thus the melting point) of oils containing paraffinic wax and bitumens. The illustrated pour point reduction also evidences increased solubility of the wax and bitumen components.

Example 2

The pour point of the crude oil described in Example 1 can be continuously reduced by approximately 8° C. while the crude is being produced and within the production tubing in a well producing 100 barrels per day crude in combination with 40 volume percent water (based on crude plus water) by continuously introducing into the crude, at its point of entry into the production tubing, an aqueous solution containing 10 weight percent equivalent potassium trithiocarbonate having a pH of 3 at a rate of 200 gallons per day. The solution can be introduced through a "spaghetti" line passing down the well in the annular space between the production tubing and well casing and terminating proximate the producing zone. This rate of thiocarbonate introduction corresponds to approximately 2700 ppm. equivalent carbon disulfide based on dry crude.

Numerous variations and modifications of the concepts of this invention will be apparent to one skilled in the art in view of the aforegoing disclosure and the appended claims and are intended to be encompassed within the scope of this invention as defined by the following claims.

## Claims

1. A method for producing petroleum from a well penetrating a petroleum-bearing formation, wherein said petroleum comprises a member selected from waxy, paraffinic hydrocarbons, bitumens, and combinations thereof, which comprises introducing into said well a thiocarbonate selected from ammonium and alkali and alkaline earth metal tri-and tetrathiocarbonates and combinations thereof.

2. A method according to claim 1, wherein said thiocarbonate is introduced into said petroleum in said well at a concentration corresponding to at least 50 ppm. equivalent carbon disulfide.

3. A method defined in claim 2, wherein said thiocarbonate is introduced into said petroleum at a concentration corresponding to up to about 4000 ppm. equivalent carbon disulfide.

4. A method according to any one of claims 1 to 3, wherein said petroleum is produced from said well in admixture with water, and said thiocarbonate is introduced into said water within said well.

5. A method according to claim 4, wherein said water has, or is treated to obtain, a pH below about 9.

6. A method according to any one of claims 1 to 5, wherein said thiocarbonate is introduced into said well as an aqueous solution having a pH below about 7.

7. A method according to claim 6, wherein said thiocarbonate is introduced into said well as an aqueous solution having a pH below about 3.

8. A method according to any one of claims 1 to 7, wherein said thiocarbonate is introduced into said well as an aqueous solution containing sufficient added acid or buffer to produce a pH in said solution of about 6 or less, and the resulting, acidified aqueous solution is admixed with said petroleum within said well.

9. A method according to any one of claims 1 to 8, wherein said thiocarbonate is introduced into said well in a concentration corresponding to at least about 100 ppm. equivalent $CS_2$ based on the weight of said petroleum and sufficient to reduce the melting point of said petroleum.

10. A method according to any one of claims 1 to 9, wherein said thiocarbonate is introduced into said well in a concentration corresponding to at least about 100 ppm. equivalent $CS_2$ based on said petroleum and sufficient to reduce the pour point of said petroleum.

11. A method according to any one of claims 1 to 10, wherein said thiocarbonate is introduced into said well at a concentration corresponding to at least about 100 ppm. equivalent $CS_2$ based on the weight of said petroleum and sufficient to enhance the solubility of deposits within said well in said petroleum, which deposits comprise waxy petroleum fractions, bituminous petroleum fractions and combinations thereof.

12. A method according to claim 11, wherein said thiocarbonate and/or carbon disulfide resulting from the decomposition of said thiocarbonate, is contacted with said petroleum-bearing formation, in combination with said petroleum, under conditions sufficient to dissolve waxy and/or bituminous petroleum deposits from the well bore in the vicinity of said petroleum-bearing formation.

13. A method according to claim 12, which further comprises acidizing said petroleum-bearing formation after said treatment.

14. A method according to any one of claims 1 to 13, wherein said thiocarbonate is introduced into said well at a pressure in excess of the pressure within said petroleum-bearing formation, and said pressure is later reduced to commence production of petroleum from said formation.

15. A method according to any one of claims 1 to 14, wherein said well comprises production tubing for passing said petroleum upwardly through said well and terminating, at its lower extremity, in the vicinity of said petroleum-bearing formation and forming an annular passageway within said well, and said thiocarbonate is introduced into said well as an aqueous solution through said annular passageway and into admixture with said petroleum in the vicinity of said lower extremity of said production tubing.

16. A method according to claim 15, wherein said thiocarbonate and/or carbon disulfide resulting from the decomposition of said thiocarbonate is maintained in admixture with said petroleum within said production tubing at a concentration corresponding to at least about 100 ppm. equivalent carbon disulfide for at least about 30 minutes and sufficient to enhance the solubility in said petroleum of waxy and/or bituminous petroleum deposits within said production tubing.

17. A method for increasing the solubility of waxy hydrocarbons and bitumens in petroleum, which comprises admixing with said petroleum a thiocarbonate having the empirical formula $M_nCS_x$ wherein n is 1 when M is an alkaline earth metal, n is 2 when M is ammonium or an alkali metal, and x is 3, 4 or values between 3 and 4.

18. A method for reducing the melting point and/or the pour point of a wax-containing petroleum or hydrocarbon fraction, which comprises admixing with said petroleum or hydrocarbon fraction a thiocarbonate selected from ammonium and alkali and alkaline earth metal tri- and tetrathiocarbonates and combinations thereof.

19. A method according to claim 17 or 18, wherein said thiocarbonate is admixed with said petroleum or hydrocarbon in the presence of water.

20. A method according to claim 19, wherein said thiocarbonate is admixed with said petroleum or hydrocarbon in an amount corresponding to an equivalent carbon disulfide concentration of at least about 50 ppm. based on the weight of said petroleum or hydrocarbon.

21. A method according to claim 19 or 20, wherein said water has a pH of about 6 or less.

22. A method according to claim 21, which further comprises admixing said thiocarbonate with said petroleum and water in the presence of sufficient acid to reduce the pH of said water to about 6 or less.

23. A method according to any one of claims 17 to 22, wherein said petroleum or hydrocarbon comprises at least about 5 weight percent waxy hydrocarbons.

24. A method according to claim 18 or any claim dependent thereon, wherein said thiocarbonate is admixed with said petroleum or hydrocarbon in an amount sufficient to reduce the melting point of said petroleum or hydrocarbon by at least about 5° C.

25. A method according to claim 18 or any claim dependent thereon wherein said petroleum or hydrocarbon has a pour point of at least about 0° C. and said thiocarbonate is admixed with said petroleum or hydrocarbon in an amount sufficient to decrease said pour point by at least about 5° C.

26. A method according to claim 25, wherein said thiocarbonate is admixed with petroleum or hydrocarbon in an amount sufficient to decrease said pour point by at least about 10° C.

27. A composition comprising a hydrocarbon selected from crude petroleum and hydrocarbon fractions containing at least 5 weight percent of a member selected from waxy hydrocarbons, bitumens and combinations thereof, and a thiocarbonate selected from ammonium and alkali and alkaline earth metal tri- and tetrathiocarbonates and combinations thereof.

28. A composition according to claim 27, which further comprises water and an amount of said thiocarbonate corresponding to at least about 50 ppm. equivalent carbon disulfide based on the weight of said hydrocarbon.

29. A composition according to claim 28, which further comprises added acid, and wherein the pH of said water is about 7 or less.